Europäisches Patentamt

European Patent Office

Office européen des brevets

(11) Publication number: **0 350 064**
**A2**

## EUROPEAN PATENT APPLICATION

(21) Application number: 89112477.8

(22) Date of filing: 07.07.89

(51) Int. Cl.⁴: **G10L 3/00 , G04G 1/00**

(30) Priority: 07.07.88 JP 90337/88 U
07.07.88 JP 90341/88 U

(43) Date of publication of application:
**10.01.90 Bulletin 90/02**

(84) Designated Contracting States:
**DE FR GB**

(71) Applicant: CASIO COMPUTER COMPANY
LIMITED
6-1, 2-chome, Nishi-Shinjuku
Shinjuku-ku Tokyo(JP)

(72) Inventor: Yahagi, Mitsuhisa Pat. Dept. Dev.
Div., Hamura
R&D Ctr. Casio Computer Co Ltd 3-2-1
Sakae-cho
Hamura-machi Nishitama-gun Tokyo
190-11(JP)
Inventor: Tonegawa, Nobuyuki Pat. Dept. Dev.
Div., Hamura
R&D Ctr. Casio Computer Co Ltd 3-2-1,
Sakae-cho
Hamura-machi Nishitama-gun Tokyo
190-11(JP)

(74) Representative: Patentanwälte Grünecker,
Kinkeldey, Stockmair & Partner
Maximilianstrasse 58
D-8000 München 22(DE)

(54) Speech recognition apparatus.

(57) When a speech of a predetermined sound pressure or more is externally input while a flip-flop (12) is in a reset state, a time measuring circuit (14) starts time measurement in accordance with a signal from a speech detector (9). When a speech of a predetermined sound pressure or more is externally input while time measurement is being performed by the time measuring circuit (14), a measurement time of the time measuring circuit (14) at this moment is stored in a time storage RAM (17). After a predetermined time has elapsed, if a speech recognizing circuit (10) recognizes that the external speech is "stop" for stopping a measurement operation in the time measuring circuit (14), time information stored in the time storage RAM (17) is read out and displayed as time information upon stopping on a display unit.

FIG.1

# Speech recognition apparatus

The present invention relates to a speech recognition apparatus for recognizing input speech data and performing an operation according to the recognition result.

When a conventional speech recognition apparatus incorporated in an electronic instrument or the like receives a speech input, the apparatus recognizes speech data of the input speech over a predeter-mined time and starts a predetermined operation in accordance with the recognition result after recognition is finished.

Speech recognition techniques of this type are described in, for example, USP 4,158,750, USP 4,461,023, USP 4,532,648 and USP 4,596,031.

When the above conventional speech recognition apparatus is incorporated in, e.g., a stopwatch device or timer device to control start or stop of a time measurement operation in accordance with a speech such as "start" or "stop", the following problem arises. That is, in a track or swimming race, for example, assume that racers or swimmers start in accordance with a speech "start" and a stopwatch device recognizes the speech "start" and then starts time measurement. In this case, the competitors start not after the speech "start" is completely finished but simultaneously with start of the speech "start". The stopwatch device, however, starts time measurement after the sppech "start" is completely input and recognized. Therefore, since a time difference is produced between the start of the competitors and that of time measurement of the stopwatch device, a correct measurement time cannot be obtained. This problem is similarly posed, as in the case of "start", when measurement is to be stopped by a speech "stop" or elapsed time data is to be obtained by a speech such as "lap" or "split".

When the speech recognition apparatus is incorporated in a video tape recorder or speech recording device to start or stop video or sound recording by a speech, the same problem as in the case of the stopwatch device arises. In addition, for example, in a system in which different data are automatically, selectively displayed on a screen at a predetermined time interval and desired data can be held on the screen by a speech of "stop" when it is displayed on the screen, the same problem is posed.

The present invention has been made in consideration of the above conventional problem and has as its object to provide a speech recognition apparatus capable of eliminating a time difference upon speech recognition to perform a correct operation.

In order to achieve the above object of the present invention, there is provided a speech recognition apparatus comprising:

speech input means for externally inputting a speech;

first control means, connected to the speech input means, for performing a predetermined operation when the speech is input;

speech recognizing means, connected to the speech input means, for recognizing the input speech; and

second control means, connected to the speech recognizing means, for performing an operation different from the predetermined operation performed by the first control means on the basis of a recognition result obtained by the speech recognizing means.

With this arrangement, the present invention has an effect of correctly performing time measurement or data search in accordance with speech recognition.

This invention can be more fully understood from the following detailed description when taken in conjunction with the accompanying drawings, in which:

Fig. 1 is a block diagram showing an internal circuit of a stopwatch device adopting a speech recognition apparatus of the present invention;

Figs. 2A to 2E are timing charts for explaining an operation of the embodiment shown in Fig. 1;

Fig. 3 is a block diagram showing an internal circuit of a data memory device adopting a second embodiment of the present invention;

Fig. 4 is a diagram showing the contents of a RAM 22 according to the embodiment shown in Fig. 3;

Fig. 5 is a flow chart for explaining in detail speech processing of the embodiment shown in Fig. 3;

Figs. 6 and 7 are views showing switching of display according to a speech input upon data search of the embodiment shown in Fig. 3;

Fig. 8 is a block diagram showing an internal circuit of a stopwatch device adopting a third embodiment of the present invention;

Fig. 9 is a diagram showing the contents of a RAM 42 shown in Fig. 8;

Fig. 10 is a flow chart for explaining overall processing of the embodiment shown in Fig. 8;

Fig. 11 is a flow chart for explaining in detail speech processing shown in Fig. 10;

Fig. 12 is a diagram showing the contents of a RAM in a data memory device adopting a fourth embodiment of the present invention;

Fig. 13 is a flow chart for explaining in detail speech processing of the embodiment shown in Fig. 12; and

Fig. 14 is a view showing switching of display according to a speech input upon data search of the embodiment shown in Fig. 12.

Embodiments of the present invention will be described in detail below with reference to the accompanying drawings.

1st Embodiment

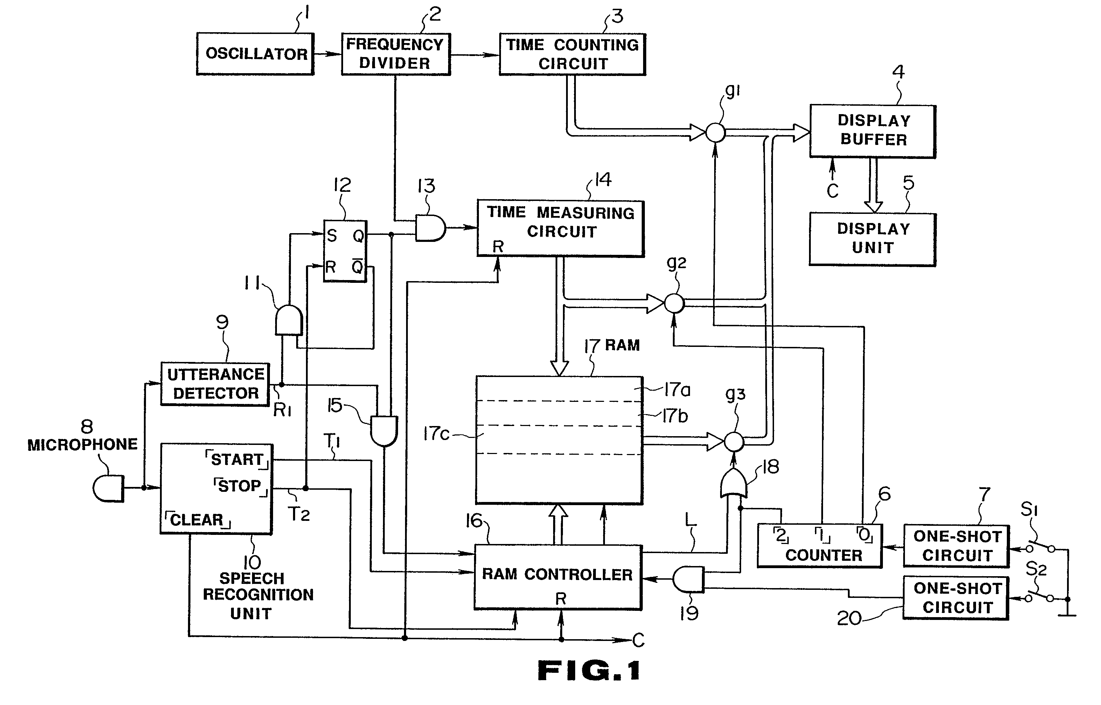

Fig. 1 is a block diagram showing an internal circuit of a stopwatch device adopting the present invention.

Referring to Fig. 1, oscillation clock pulses output from an oscillator 1 are frequency-divided by a frequency divider 2 into count signals having, e.g., 1-sec period and input to a time counting circuit 3. The time counting circuit 3 counts the count signals and outputs current time data including "hour", "minute", "second", and the like. When a gate g1 is enabled, the current time data is displayed on a digital display unit 5 via a display buffer 4. The gate g1 and other two gates g2 and g3 are enabled when the contents of a ternary counter 6 are "0", "1", and "2", respectively. The current time data, measurement time data of a time measuring circuit 14 to be described later, and split time data (data representing an elapsed time from start of measurement) of a RAM 17 to be described later are displayed on the display unit 5 via the display buffer 4 when the gates g1, g2, and g3 are enabled, respectively. The counter 6 counts a one-shot pulse output from a one-shot circuit 7 each time an operation switch S1 for switching display is operated. Therefore, switching display of the above data is performed by operating the switch S1 for display switching.

Reference numeral 8 denotes a microphone for inputting a speech. A speech input from the speech inputting microphone 8 is detected by an utterance detector 9, and input speech data is supplied to a speech recognition unit 10. When the utterance detector 9 detects that a sound pressure of the input speech exceeds a predetermined level, it outputs a high-level one-shot detection signal R1. The signal R1 is supplied to the set input terminal S of a flip-flop 12 via an AND gate 11 for receiving a $\overline{Q}$ output from the flip-flop 12 which keeps the high level except when measurement is performed by the measuring circuit 14 to be described later. The Q output from the flip-flop 12 is supplied to an AND gate 13 together with a count signal of a predetermined period, e.g., 100 Hz signal from the frequency divider 2. Clock signals output from the AND gate 13 are counted by the measuring circuit 14. That is, when a speech is input during a stop state in which the $\overline{Q}$ output from the flip-flop 12 is at high level, the signal R1 from the speech detector 9 is supplied to the flip-flop 12 via the AND gate 11. Therefore, the Q output from the flip-flop 12 goes to high level, and the measuring circuit 14 starts counting of the 100 Hz signals.

The Q output from the flip-flop 12 is also supplied to an AND gate 15 which receives the detection signal R1 output each time the detector 9 detects a speech. An output signal from the AND gate 15 is supplied to a RAM controller 16. Each time the RAM controller 16 receives the detection signal R1 from the AND gate 15, it stores measurement time data from the measuring circuit 14 in an address area designated from a plurality of data memory areas 17a, 17b, ..., of a RAM 17 and designates the next memory area. That is, when a speech is input from the microphone 8 and detected by the detector 9 while the Q output from the flip-flop 12 is at high level and the measuring circuit 14 performs measurement, the contents of the circuit 14 at this moment are sequentially stored in memory areas of the RAM 17 designated by the RAM controller 16.

The speech signal from the microphone 8 is also supplied to the speech recognition unit 10 to start speech recognition. After a predetermined time has elapsed, speech recognition is completed. The following processing is executed on the basis of whether the recognition result represents "start", "stop", "clear", or "split".

When the input speech is recognized as "start", the unit 10 outputs a recognition signal T1 to the RAM controller 16. When the controller 16 receives the recognition signal T1, it designates an address of a first memory area 17a.

When the input speech is recognized as "stop", the unit 10 outputs a recognition signal T2 as a reset signal to the flip-flop 12. As a result, the Q output from the flip-flop 12 goes to low level to disable the AND gate 13, thereby finishing time measurement by the measuring circuit 14. Since the signal T2 is also supplied to the RAM controller 16, measurement data stored lastly as a split time in the RAM 17, i.e., data of the circuit 14 stored in the RAM 17 when the speech "stop" is input is read out. At the same time, a signal L is supplied from the controller 16 to the gate g3 via an OR gate 18 to enable the gate g3. As a result, the last split time data, i.e., the time data stored when the speech "stop" is generated passes through the gate g3 and displayed on the display unit 5 via the display buffer 4. Therefore, when a speech "stop" is input, measurement data at this moment is stored as a split time in the RAM 17, and the measuring circuit 14 continues time measurement until the recognition signal T2 is output. After recognition of the speech "stop" is completed, the measurement is finished, and the split time stored in the RAM 17 upon inputting of the speech "stop" is displayed as a final measurement time of this stop processing.

When the speech is recognized as "clear", all the contents in the measuring circuit 14, the RAM controller 16, and the display buffer 4 are cleared.

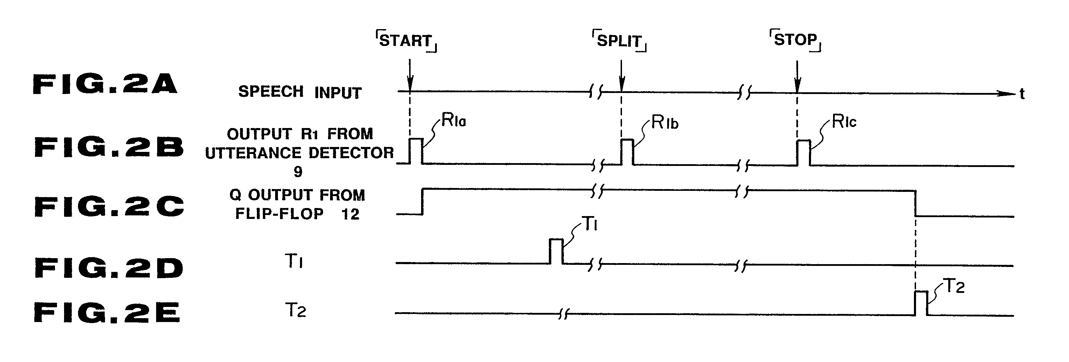

Figs. 2A to 2E show timing charts of the circuits shown in Fig. 1.

Whenever a speech such as "start", "split", or "stop" is input as shown in Fig. 2A, the utterance detector 9 outputs the signal R1 as shown in Fig. 2B, and the contents of the measuring circuit 14 are stored in the RAM 17.

When the Q output from the flip-flop 12 shown in Fig. 2C is at low level, the $\overline{Q}$ output from the flip-flop 12 is at high level. At this time, if a speech is input, the signal R1 from the utterance detector, i.e., a first signal R1a shown in Fig. 2B is output via the AND gate 11 to set the Q output from the flip-flop 12 at high level, thereby starting time measurement by the circuit 14.

Thereafter, when the speech recognition unit 10 recognizes that the input speech is "start", the recognition signal T1 is supplied to the RAM controller 16, and the controller 16 designates the address of the first memory area 17a of the RAM 17. When the Q output of the flip-flop 12 is at high level, time measurement is started by a speech other than "start". When a speech other than "start" is input, although time measurement is not an object of the speech, start of the time measurement is not problematic at all. If a stopwatch must be used during the time measurement, speech "stop" and "clear" need only be input.

After time measurement is started as described above, speech inputs other than "stop" or "clear" are considered as a speech input of "split". At the same time a speech "split" is input, a signal R1b shown in Fig. 2B is supplied to the RAM controller 16 via the AND gate 15 to store a split time measured by the measuring circuit 14 in a designated memory area of the RAM 17 and to designate the next memory area in the RAM 17.

When the input speech is "stop", time data of the measuring circuit 14 obtained when the speech "stop" is input is stored in the RAM 17 as represented by R1c in Fig. 2B, and the circuit 14 continues time measurement until the recognition signal T2 representing "stop" shown in Fig. 2E is output. When the signal T2 is output, however, since this signal causes the display unit 5 to display the time data output from the circuit 14 and stored in the RAM 17, an operator can check the time data obtained when the speech "stop" is generated.

When the content of the counter 6 is switched to "2", the gate g3 is enabled via the OR gate 18, and the content is also supplied to the AND gate 19. At this time, each time the switch S2 is operated, a one-shot pulse is output from the one-shot circuit 20 to the RAM controller 16 via an AND gate 19. The controller 16 sequentially designates an address of the RAM 17 and reads out split time data each time the above pulse is input. The sequentially readout split time data are supplied through the gate g3 and displayed on the display unit 5 via the display buffer 4.

As described above, according to this embodiment, when the utterance detector 9 detects a speech while the measuring circuit 14 does not perform time measurement, time measurement is immediately performed assuming that the speech is "start". Therefore, no time difference is produced.

When a speech is detected during time measurement by the circuit 14, time data at this moment is immediately stored assuming that the speech is "split". Therefore, in the case of "split", no time difference is produced. When a speech is not "split" but "stop", a time difference is corrected because correction is performed when recognition of "stop" is finished. Therefore, a correct stop time is obtained.

In the above embodiment, a time from measurement start is stored and displayed as "split". By using a speech "lap" in place of "split", a time interval between preceding and current "lap" speech may be stored and displayed.

2nd Embodiment

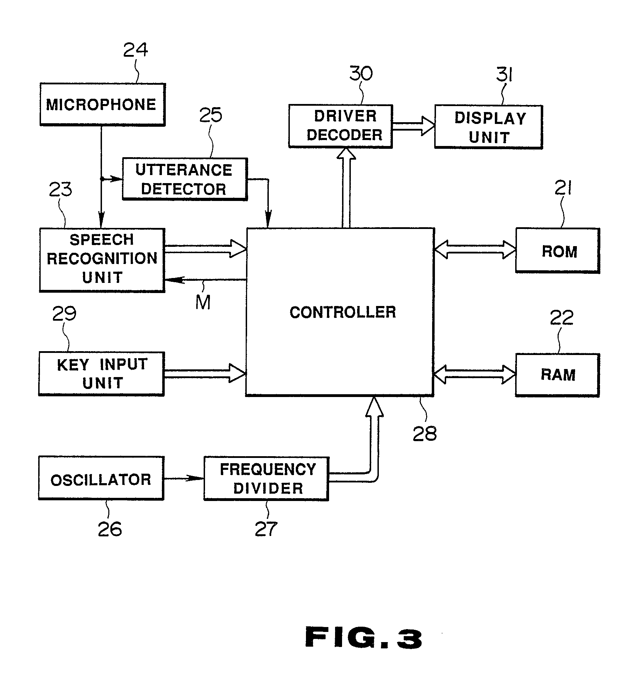

Fig. 3 is a block diagram showing internal circuits of a data memory device which adopts a second embodiment of the present invention.

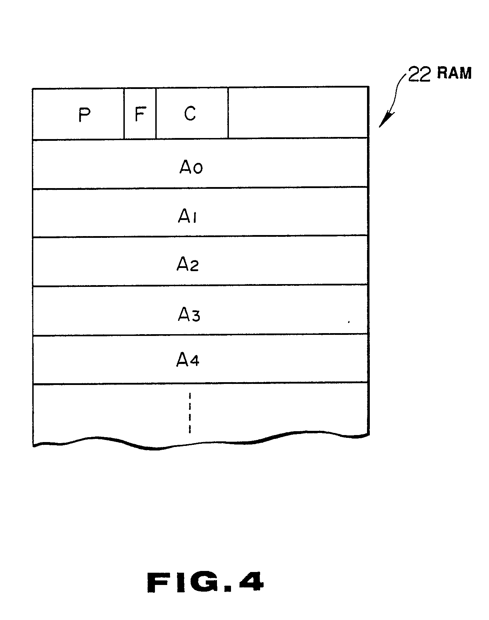

Referring to Fig. 3, a ROM 21 is a read-only memory which stores microprograms and data for controlling the entire system. A RAM 22 is a random access memory used for data read/write of various data and including various registers shown in Fig. 4. A large number of data memories A0, A1, ... are memories for storing item data including a plurality of characters and numerals such as name and telephone number data or date, time and schedule date. Page pointer P designates an address (page) of one of the above data memories. "1" is written in a search flag F during data search and "0" is written therein upon completion of search. A counter C counts a 32 Hz count signal or a 32 Hz count signal offset therefrom by a half period.

Referring to Fig. 3, a speed recognition unit 23 recognizes speech data input from a microphone 24. An utterance detector 25 detects that a speech having a predetermined volume or more is input. An oscillator 26 outputs a clock signal of a predetermined period. A frequency divider 27 frequency-divides the above clock signal and outputs a count signal of a predetermined period (e.g., 1/32 sec).

A controller 28 is an arithmetic circuit for performing speech processing corresponding to outputs from the speech recognition unit 23 and the utterance detector 25 or key input processing corresponding to a key input from a key input unit 29 on the basis of the programs stored in the ROM 21. Various data obtained by these processing operations are displayed on a dot-matrix display unit 31 by a driver decoder 30.

Speech processing and accompanied display processing performed by the data memory device shown in Fig. 3 upon data search will be described.

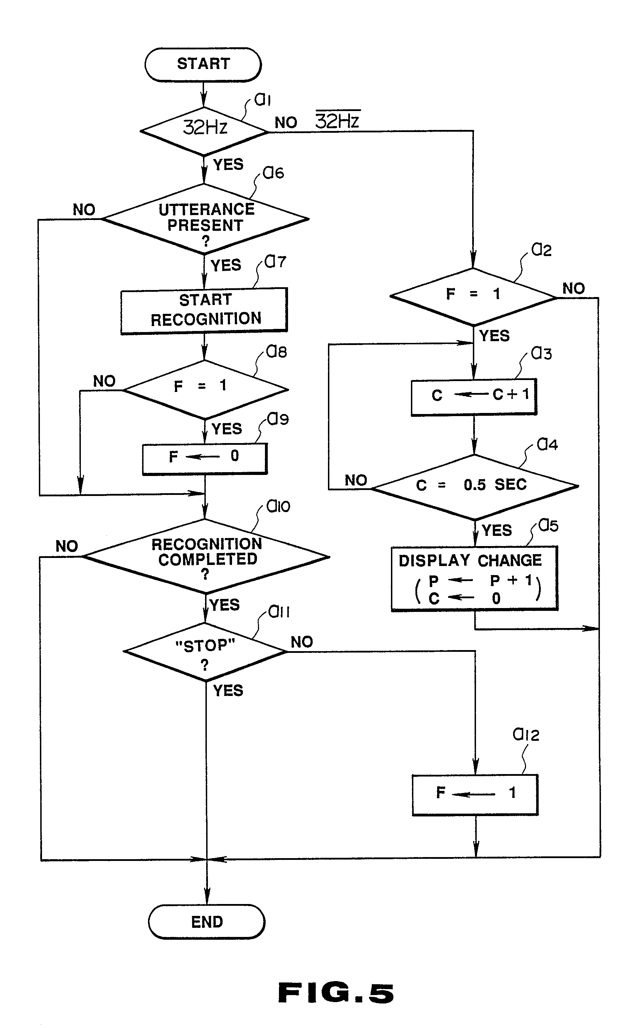

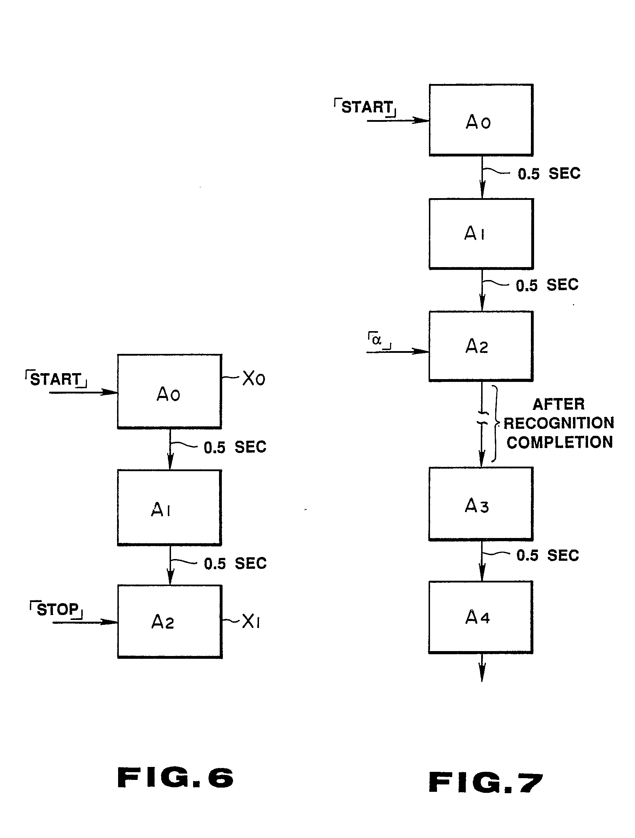

Fig. 6 shows a display state change in the display unit 31. For example, as indicated by X0 shown in Fig. 6, assume that name and telephone number data stored in the memory area A0 of the RAM 22 is displayed on the display unit 31. In this state, in order to search another name and telephone number, a speech "start" is input. Fig. 5 is a flowchart for explaining an operation performed upon input of the speech. In step $a_1$, whether a 32 Hz signal is input is checked. In step $a_6$, whether a speech is input is checked by the utterance detector 25. These checking operations are performed on the basis of whether the input speech has a sound pressure of a predetermined level or more. When the speech "start" is input as described above, the utterance detector 25 immediately outputs a signal. Therefore, this is determined in step $a_6$, and the flow advances to step $a_7$. In step $a_7$, a signal M, in Fig. 3, is supplied to the speech recognition unit 23 to start a speech recognizing operation. In step a8, whether F is 1, i.e., whether a search operation is being performed is checked. At this time, since data search is not started yet, the flow advances to step $a_{11}$, and a determining operation for checking whether the recognizing operation is completed is executed. Since the recognizing operation requires several seconds before completion, however, recognition is not completed yet at this moment, and the flow is ended. When a 32 Hz signal is output thereafter, the flow is ended through steps $a_1$, $a_6$, and $a_{10}$ without executing any processing operation. When the 32 Hz signal is output, the flow is ended through steps $a_1$ and a Therefore, display contents are not changed at all in either case. At a timing at which the 32 Hz signal is output and recognition completion is determined in step $a_{10}$, whether the speech is "stop" is checked in step $a_{11}$. Since the input speech is "start", the flow advances to step $a_{12}$, and "1" is set in the flag F. When "1" set in the flag F, this is detected in step $a_2$ each time the 32 Hz signal is input, and the counter C counts the 32 Hz signals

in step $a_3$. When it is determined in step $a_{40}$ that the content of the counter C is 0.5 seconds, display change processing is performed in step $a_5$. In this processing, the page pointer P is incremented by one, and the content in the counter C is reset to be zero. Therefore, during data search, the content of the pointer P is incremented by one each time the counter C counts 0.5 seconds, and the contents in the data memories A0, A1, ... are sequentially displayed as shown in Fig. 6.

When a speech is input at a timing at which the 32-Hz count signal is input in step $a_1$ while the display is switched every 0.5 seconds, whether a speech is input is checked in step $a_6$. If a speech is input, speech recognition is started in step $a_7$. Subsequently, whether F = 1 (i.e., whether data search is being performed) is checked in step $a_8$. If F = 1 in step $a_8$, "0" is set in the flag F in step $a_9$. That is, the input speech is determined to be "stop", and data search is temporarily stopped.

Thereafter, when speech recognition is completed, it is checked in step $a_{11}$ whether the recognition result is "stop" for stopping data search. If "stop" is determined in step $a_{11}$, the processing is ended. Therefore, if a speech "stop" is input during data search, search is immediately finished, and data displayed at this moment is still-displayed. For example, if the speech "stop" is input while the content of the data memory A2 is displayed as indicated by X1 in Fig. 6, search is immediately stopped, and the content of the data memory A2 is kept displayed.

If it is determined in step $a_{11}$ that the speech is not "stop" (e.g., the speech is other than "start" and "stop"), the content of the search flag F is reset yo "1" in step $a_{12}$. That is, if "stop" is determined to set F = 0 in step $a_9$, F = 1 is reset when the recognition result is not "stop", and data search is started (restarted). For example, as shown in Fig. 7, when a speech (to be referred to as "α" hereinafter) other than "stop" is input while the content of the data memory A2 is displayed, data search is temporarily stopped, and the content of the data memory A2 is kept displayed. After a recognition time has elapsed, however, search is restarted.

According to the second embodiment shown in Figs. 3 to 7, as described above, when a certain speech is input, the input speech is determined to be "stop" to temporarily stop search. If the speech recognition result obtained thereafter is other than "stop", correction based on the recognition result is performed, i.e., search is restarted. Therefore, since no time difference is produced between the display data upon speech input and completion of speech recognition, data search is correctly performed in accordance with a speech input.

3rd Embodiment

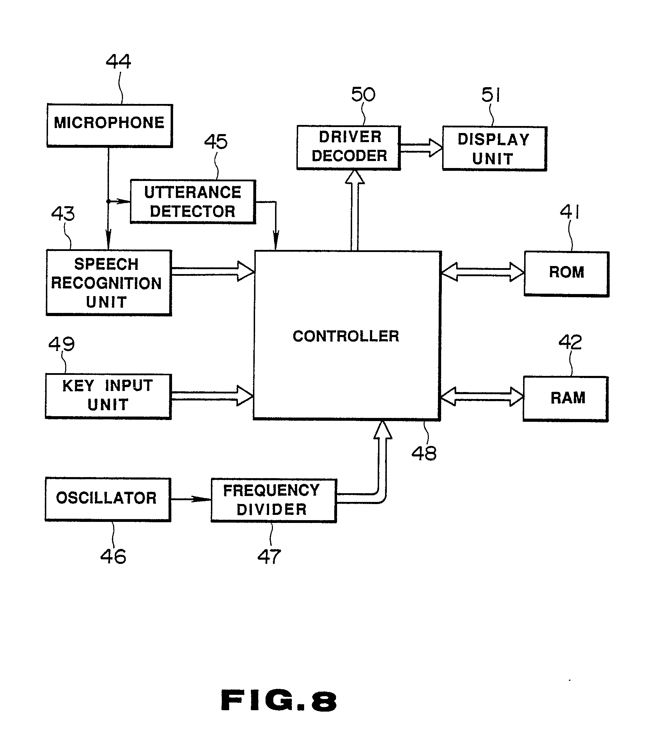

Fig. 8 is a block diagram showing internal circuits of a stopwatch device which adopts a third embodiment of the present invention.

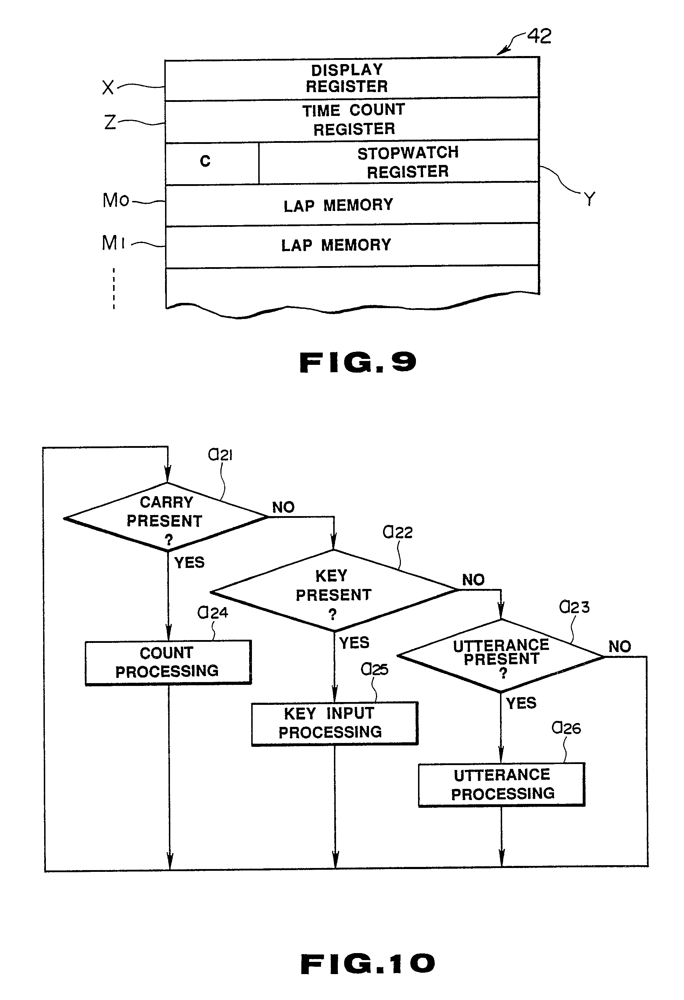

Referring to Fig. 8, a ROM 41 is a read-only memory storing microprograms and data for controlling the entire system. A RAM 42 is a memory for data read/write of various data and includes various memory areas as shown in Fig. 9. Referring to Fig. 9, a display register X, a stopwatch register Y, and a time count register Z store data displayed on a display unit 51 to be described later, measurement data upon stopwatch operation, and time data representing a current time, respectively. A plurality of lap memories M0, M1, ... sequentially store lap data upon stopwatch operation. A register C starts counting when a speech is input and stops counting when speech recognition is finished, as will be described in detail later.

Referring to Fig. 8, a speech recognition unit 43 recognizes speech data input from a microphone 44. An utterance detector 45 detects that a speech having a predetermined sound pressure or more is input from the microphone 44. An oscillator 46 outputs a clock signal of a predetermined period. A frequency divider 47 frequency-divides the above clock signal and outputs a count signal of a predetermined period (e.g., 1/32 sec).

A controller 48 is an arithmetic circuit for performing speech processing corresponding to outputs from the speech recognition unit 43 and the utterance detector 45, key input processing corresponding to a key input from a key input unit 49, and count processing corresponding to the count signal from the frequency divider 47, on the basis of the programs stored in the ROM 41. Time data, stopwatch data, and the like obtained by the above processing operations are displayed on a display unit 51 by a decoder driver 50.

Fig. 10 is a general flowchart showing overall processing controlled by the controller 48 in accordance with the programs stored in the ROM 41.

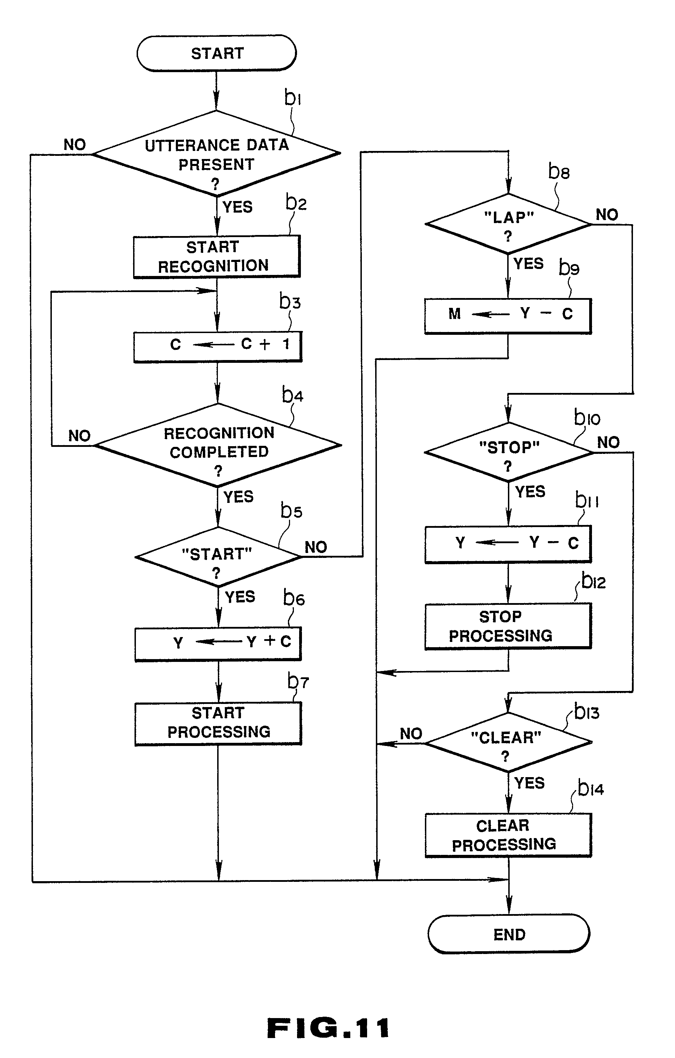

Referring to Fig. 10, in steps $a_{21}$ to $a_{23}$, operations are performed to check whether a count carry signal from the frequency divider 47, a key input from the key input unit 49, and a speech input from the microphone 44 (speech detection of the utterance detector 45) are present, respectively. If it is determined in step $a_{21}$ that a count carry signal is present, count processing is performed in step $a_{24}$. In this count processing, current time data or stopwatch data including hour, minute, second, or the like is counted on the basis of the count carry signal. If it is determined in step $a_{22}$ that a key input is present, key input processing is performed in step $a_{25}$. The key input processing corresponds to various keys (e.g., a mode switching key and a time correction key) operated by the key input unit 49. If it is determined in step $a_{23}$ that a speech input is present, speech processing is performed in step $a_{26}$. The speech processing will be described in detail with reference to Fig. 11.

Referring to Fig. 11, whether utterance data is present is checked in step $b_1$. If the utterance data is present, the flow advances to step $b_2$, and speech recognition is started by the speech recognition unit 43 shown in Fig. 8. At the same time, in step $b_3$, the counter C shown in Fig. 9 starts counting. Counting is continuously performed until it is determined in step $b_4$ that speech recognition by the recognition unit 43 is finished. That is, the counter C counts a time interval from detection of the speech input to completion of speech recognition.

When speech recognition is finished, operations are performed in steps $b_5$, $b_8$, $b_{10}$, and $b_{13}$ to check whether the recognition result indicates "start" for starting a stopwatch operation, "lap" for writing a lap time as an elapsed time, "stop" for stopping the stopwatch operation, or "clear" for clearing measurement data, respectively. If "start" is determined in step $b_5$, the flow advances to step $b_6$, and the content of the counter C is added to the stopwatch register Y shown in Fig. 9. Thereafter, in step $b_7$, start processing is performed, i.e., the register Y is sequentially incremented by one, thereby starting time measurement processing for measuring an elapsed time interval from the start. In this case, the start processing start timing is delayed from an actual start timing (i.e., a timing at which the speech "start" is input) by a time required for speech recognition. Since this time delay is corrected by the processing in step $b_6$, however, the content in the stopwatch register Y corresponds to a correct measurement time from the actual start. For example, even if two seconds are required for speech recognition, since a delay of two seconds is added to the register Y, its content indicates a correct measurement time.

If "lap" is determined in step $b_8$, the flow advances to step $b_9$, and a value obtained by decrementing the register Y by the content of the counter C (i.e., a measurement time obtained upon speech input) is stored in a lap memory Mk (k = 0, 1, 2, ...). In this case, if the content of the register Y obtained upon completion of speech recognition is directly used as a lap time, it includes an extra time required for speech recognition. However, since the extra time is subtracted in the processing in step $b_9$, a correct lap time is obtained.

If "stop" is determined in step $b_{10}$, the flow advances to step $b_{11}$, and the register Y is decremented by the content of the counter C. Thereafter, stop processing (for stopping counting of the register Y) is performed in step $b_{12}$. In this case, if the content of the register Y obtained upon speech recognition is completed is directly used as a final elapsed time, it includes an extra time required for speech recognition as in the case of the above lap time. However, since the extra time is subtracted in the processing in step $b_{11}$, a correct elapsed time is obtained.

If "clear" is determined in step $b_{13}$, clear processing for clearing the contents of the register Y is performed in step $b_{14}$. In this case, since a time difference is not problematic, correction by the counter C need not be performed.

According to the third embodiment, as described above, the counter C counts a time interval from speech input to recognition completion (step $b_3$), and a time difference between the speech input and completion of speech recognition is corrected using the obtained count (steps $b_5$, $b_9$, and $b_{11}$). Therefore, a very correct measurement time can be obtained. As a result, a stopwatch device based on speech input is realized.

4th Embodiment

A data memory device adopting a fourth embodiment of the present invention will be described below. An overall arrangement of internal circuits of this device is similar to that shown in Fig. 8 except for microprograms stored in a ROM 41 and the contents of a RAM 42.

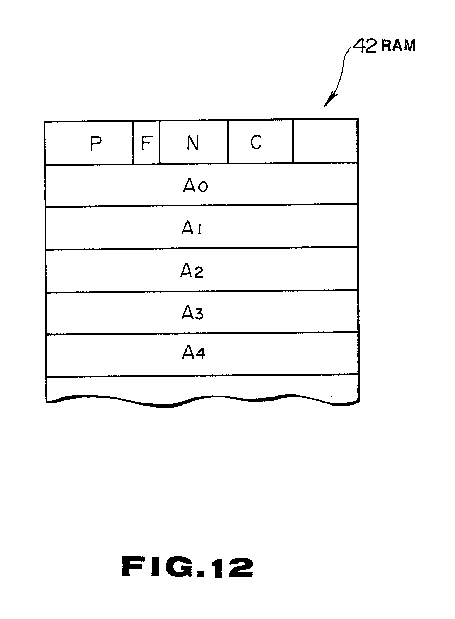

The contents of the RAM 42 according to the fourth embodiment are shown in Fig. 12. Referring to Fig. 12, a plurality of data memories A0, A1, ... store various data such as names, telephone numbers, and schedules. A page pointer P designates an address of one of the above data memories. "1" is written in a search flag F during data search, and "0" is written therein upon completion of search. A counter C counts a 32-Hz signal or a 32 Hz signal offset therefrom by a half period. A counter N counts a signal every 0.5 seconds.

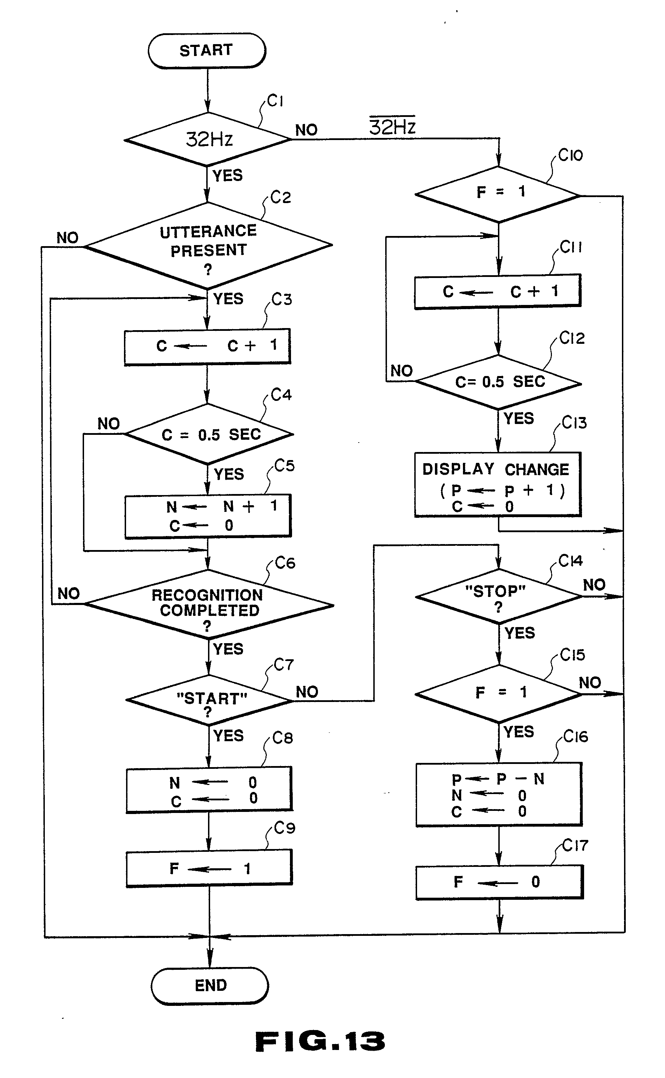

Speech processing upon data search according to the fourth embodiment will be described below with reference to Fig. 13.

In step $c_1$, whether a 32 Hz signal is input is checked. If the 32 Hz signal is input, the flow advances to step $c_2$. In step $c_2$, whether a speech is input is checked. If the speech is input, the counter C is incremented by one (corresponding to 1/32 sec) in step $c_3$. Subsequently, whether the content of the counter C is 0.5 sec is checked in step $c_4$. In this case, 0.5 seconds is a time interval for sequentially switching and displaying the data in the data memories A0, A1, ... (see steps $c_{10}$ to $c_{13}$ to be described later). If the content of the counter C is 0.5 seconds, the flow advances to step $c_5$. In step $c_5$, another counter N is incremented by one, and the content of the counter C is reset to be zero. Counting by the counter N is continuously performed until it is checked in step $c_6$ that speech recognition is completed. That is, the number of display switching times from speech input to completion of speech recognition is counted by the counter N.

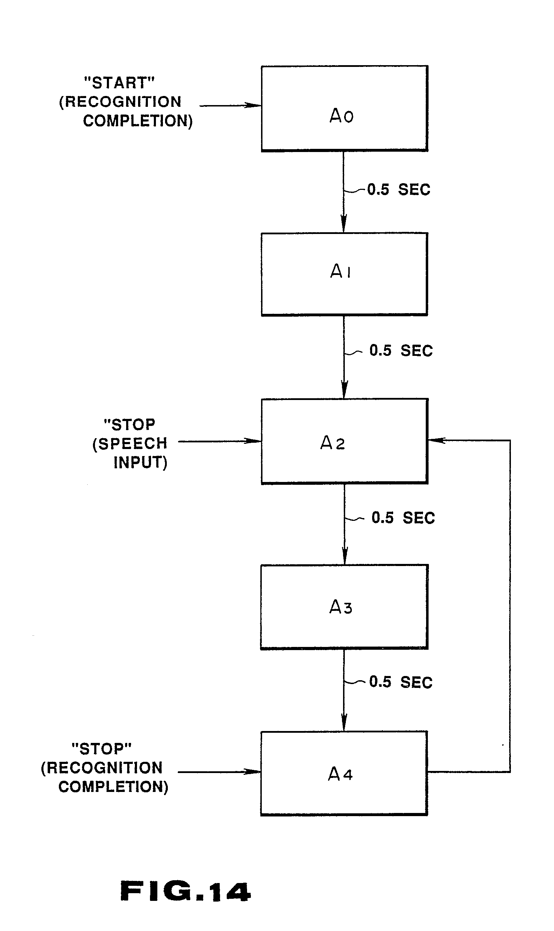

When speech recognition is finished, operations are performed in steps $c_7$ and $c_{14}$ to check whether the recognition result is "start" for starting data search and whether it is "stop" for stopping data search, respectively. If "start" is determined in step $c_7$, the flow advances to step $c_8$, and the contents of the counters N and C are reset to be zero. Thereafter, "1" is written in the search flag F in step $c_9$. If such start (search start) is performed by speech input, since a time difference between speech input and completion of speech recognition is not problematic, processing for correcting the time difference need not be performed. Until the next speech is input during data search, i.e., while F is kept determined as "1" in step $c_{10}$, the counter C counts 32 Hz signals in step $c_{11}$ If it is determined in step $c_{12}$ that the content of the counter C is 0.5 seconds, display change processing is performed in step $c_{13}$. In this processing, the page pointer P is incremented by one, and the content of the counter C is reset to be zero. Therefore, during data search, the content of the pointer P is incremented by one each time the counter C counts 0.5 seconds, and the contents of the data memories A0, A1, ... are sequentially displayed as shown in Fig. 14.

If a speech is input and "stop" is determined in step $c_{14}$, the flow advances to step $c_{15}$ to check whether the search flag F is 1 (i.e., whether data search is being performed). If F = 1 in step $c_{15}$, the flow advances to step $c_{16}$. In step $c_{16}$, the pointer P is decremented by the content of the counter N, and the contents of the counters N and C are reset to be zero. Subsequently, "0" is set in the flag F in step $c_{17}$. In this case, if the content of a page designated by the pointer P upon completion of speech recognition is directly displayed, data including a time required for speech recognition is displayed. However, since the content of the counter C is subtracted from the pointer P to correct display data, a page obtained when the speech "stop" is input is finally displayed. For example, as shown in Fig. 14, when a speech "stop" is generated while the content of the data memory A2 is displayed, assume that one second is required for this speech recognition. In this case, the content of the data memory A4 two pages after the designated page is switched and displayed, but the display is finally returned to the content two pages before this temporarily displayed page. Therefore, data not having a time difference with respect to speech input is displayed.

According to the fourth embodiment of the present invention, as described above, the counter N counts the number of display switching times from speech input (step $c_5$), and a time difference between display data upon speech input and completion of speech recognition is corrected on the basis of the count (step $c_{16}$). Therefore, search can be performed at a correct timing in synchronism with speech input. As a result, a data memory device capable of searching based on speech input is realized.

The present invention can be applied to not only the above stopwatch device or data memory device but also to various instruments such as a video or sound recording device in which data to be controlled varies over time in accordance with speech input.

## Claims

1. A speech recognition apparatus characterized by comprising:
speech input means for externally inputting a speech;
first control means, connected to said speech input means, for performing a predetermined operation when the speech is input;
speech recognizing means, connected to said speech input means, for recognizing the input speech; and second control means, connected to said speech recognizing means, for performing an operation different from the predetermined operation performed by said first control means on the basis of a recognition result obtained by said speech recognizing means.

2. An apparatus according to claim 1, characterized in that said speech input means comprises a microphone for receiving an external speech and outputting an speech signal and speech detecting means for detecting that the speech signal from said microphone has a sound pressure of not less than a predetermined value.

3. An apparatus according to claim 1, characterized in that
said speech recognizing means can recognize a plurality of different speech, and
said correcting means performs different correction operations in accordance with speech recognition results.

4. An apparatus according to claim 1, characterized in that
said first control means comprises item data memory means for storing a large number of item data including a plurality of characters, read control means for sequentially reading out the item data stored in said item data memory means upon each predetermined time, display means for sequentially switching and displaying the item data read out by said read control means, and stopping means for stopping data read when the speech is input, and
said second control means comprises restarting means for restarting data read by said read control means when a recognition result is not for stopping data read of the item data.

5. A speech recognition apparatus characterized by comprising:
time measuring means for counting a predetermined-frequency signal to obtain time information; speech input means for externally inputting a speech;
time measurement control means, connected to said speech input means, for performing one of a time measurement start operation, a time measurement stop operation, and a split time or lap time storage operation by said time measurement means when the speech is input;
speech recognizing means for recognizing the external speech; and
correcting means, connected to said speech recognizing means, for correcting the operation performed by said time measurement control means in accordance with a recognition result.

6. An apparatus according to claim 5, characterized in that said speech input means comprises a microphone for receiving the external speech and outputting an speech signal and speech detecting means for detecting that the speech signal from said microphone has a sound pressure of not less than a predetermined value.

7. An apparatus according to claim 5, characterized in that
said speech recognizing means can recognize a plurality of different speech, and
said second control means performs a plurality of the different operations in accordance with recognition results of the speech.

8. An apparatus according to claim 5, characterized in that said time measurement control means comprises memory means for storing data representing that time measurement is being performed by said time measuring means and selecting means for, when the speech is input, starting time measurement or storing the split time in accordance with a stored content in said memory means.

9. An apparatus according to claim 5, characterized in that
said time measurement control means comprises time information memory means for storing time information counted by said time measuring means when the speech is input, and
said correcting means comprises display control means for displaying the time information stored in said time information memory means as time information upon stop operation when the speech recognized by said speech recognition apparatus designates a stop operation.

10. An apparatus according to claim 5, characterized by further comprising display means for displaying time information counted by said time measuring means.

11. A speech recognition apparatus characterized by comprising:
speech detecting means for detecting that a speech is externally input:
speech recognizing means for recognizing the external speech;
first control means, connected to said speech recognition means, for performing an operation according to the recognized speech;
time measuring means for measuring time data from detection by said speech detecting means to recognition by said speech recognizing means; and correcting means for correcting the operation performed by said first control means on the basis of the time data measured by said measuring means.

12. An apparatus according to claim 11, characterized in that said speech detecting means comprises a microphone for receiving the external speech and outputting a speech signal and sound pressure detecting means for detecting that the speech signal from said microphone has a sound pressure of not less than a predetermined value.

13. An apparatus according to claim 11, characterized in that
said speech recognizing means can recognize a plurality of different speech, and
said correcting means performs a plurality of difference correction operations in accordance with recognition results of the speech.

14. An apparatus according to claim 11, characterized in that
said first control means comprises item data memory means for storing a large number of item data including a plurality of characters, read control means for sequentially reading out the item data stored in said item data memory means upon each predetermined time, display means for sequentially switching and displaying the item data read out by said read control means, and stopping means for stopping data read when a recognition result by said speech recognizing means is for stopping data read by said read control means, and
said correcting means comprises display control means for reading out from said item data memory means item data read out earlier than a timing at which data read is stopped by said stopping means by a time measured by said time measuring means and displaying the readout item data on said display means.

15. A speech recognition apparatus characterized by comprising:
first time measuring means for counting a predetermined-frequency signal to obtain time information;
speech detecting means for detecting that a speech is externally input;
speech recognizing means for recognizing the external speech;
start/stop control means, connected to said speech recrecognizing means, for controlling start or stop of a count operation by said first time measuring means in accordance with the recognized speech;
second time measuring means for obtaining time data from detection of the speech by said speech detecting means to completion of recognition; and time information correcting means for correcting the time information obtained by said first time measuring means by using the time data obtained by said second time measuring means.

16. An apparatus according to claim 15, characterized in that said speech detecting means comprises a microphone for externally receiving a speech and outputting a speech signal and sound pressure detecting means for detecting that the speech signal from said microphone has a sound pressure of not less than a predetermined value.

17. An apparatus according to claim 15, characterized by further comprising display means for displaying the time information counted by said first time measuring means.

**FIG.1**

EP 0 350 064 A2

FIG.2A SPEECH INPUT

FIG.2B OUTPUT R₁ FROM UTTERANCE DETECTOR 9

FIG.2C Q OUTPUT FROM FLIP-FLOP 12

FIG.2D T₁

FIG.2E T₂

「START」 「SPLIT」 「STOP」

$R_{1a}$ $R_{1b}$ $R_{1c}$

$T_1$

$T_2$

EP 0 350 064 A2

**FIG.3**

22 RAM

| P | F | C | |
|---|---|---|---|
| A0 | | | |
| A1 | | | |
| A2 | | | |
| A3 | | | |
| A4 | | | |

**FIG.4**

**FIG.5**

FIG.6

FIG.7

FIG.8

| | DISPLAY REGISTER |
|---|---|
| X | DISPLAY REGISTER |
| Z | TIME COUNT REGISTER |
| C | STOPWATCH REGISTER |
| Mo | LAP MEMORY |
| MI | LAP MEMORY |

42

Y

# FIG.9

**FIG.10**

EP 0 350 064 A2

START

b₁

UTTERANCE DATA PRESENT ? — NO

YES

b₂

START RECOGNITION

b₃

C ← C + 1

b₄

RECOGNITION COMPLETED ? — NO

YES

b₅

"START" ? — NO

YES

b₆

Y ← Y + C

b₇

START PROCESSING

b₈

"LAP" ? — NO

YES

b₉

M ← Y − C

b₁₀

"STOP" ? — NO

YES

b₁₁

Y ← Y − C

b₁₂

STOP PROCESSING

b₁₃

"CLEAR" ? — NO

YES

b₁₄

CLEAR PROCESSING

END

FIG.11

42 RAM

| P | F | N | C | |
|---|---|---|---|---|
| A0 | | | | |
| A1 | | | | |
| A2 | | | | |
| A3 | | | | |
| A4 | | | | |

**FIG.12**

START

C1
32Hz — NO → $\overline{32Hz}$

YES

C2
UTTERANCE PRESENT ? — NO

YES

C3
C ← C + 1

C4
C = 0.5 SEC — NO

YES

C5
N ← N + 1
C ← 0

C6
RECOGNITION COMPLETED ? — NO

YES

C7
"START" ? — NO

YES

C8
N ← 0
C ← 0

C9
F ← 1

C10
F = 1

C11
C ← C + 1

C12
C = 0.5 SEC — NO

YES

C13
DISPLAY CHANGE
( P ← P + 1 )
C ← 0

C14
"STOP" ? — NO

YES

C15
F = 1 — NO

YES

C16
P ← P − N
N ← 0
C ← 0

C17
F ← 0

END

**FIG.13**

"START"
(RECOGNITION
COMPLETION)

$A_0$

0.5 SEC

$A_1$

0.5 SEC

"STOP
(SPEECH
INPUT)

$A_2$

0.5 SEC

$A_3$

0.5 SEC

"STOP"
(RECOGNITION
COMPLETION)

$A_4$

# FIG.14